**Europäisches Patentamt**

(19) **European Patent Office** (11) Numéro de publication: **0 094 324**

**Office européen des brevets** **B1**

(12) **FASCICULE DE BREVET EUROPÉEN**

(45) Date de publication du fascicule du brevet: (51) Int. Cl.⁴: **B 23 K 3/06**
13.08.86

(21) Numéro de dépôt: **83400958.1**

(22) Date de dépôt: **11.05.83**

(54) Dispositif d'alimentation d'un fil de soudure pour un fer à souder électrique du type crayon.

(30) Priorité: **12.05.82 FR 8208266**

(43) Date de publication de la demande:
**16.11.83 Bulletin 83/46**

(45) Mention de la délivrance du brevet:
**13.08.86 Bulletin 86/33**

(84) Etats contractants désignés:
**AT BE CH DE GB IT LI LU NL SE**

(56) Documents cité:
**DE-A-1 440 589**
**DE-A-2 318 689**
**FR-A-2 201 157**

(73) Titulaire: **PRESTINOX S.A. Société Anonyme dite:,
31 à 35 Route de Tremblay Boîte Postale No 5,
F-93420 Villepinte (FR)**

(72) Inventeur: **Oury, Jean- Claude, 8, avenue Pablo
Picasso, F-93420 Villepinte (FR)**

(74) Mandataire: **Bruder, Michel, 10 rue de la Pépinière,
F-75008 Paris (FR)**

LIBER, STOCKHOLM 1986

## Description

La présente invention concerne un dispositif d'alimentation d'un fil de soudure pour un fer à souder électrique du type crayon.

Pour effectuer le soudage de fils électriques, dans le domaine du câblage, l'opérateur tient généralement le fer à souder électrique d'une main et le fil de soudure de l'autre main, ce qui rend l'opération de soudage peu commode et exige que les pièces à souder soient préalablement maintenues en contact l'une avec l'autre. Pour remédier à ces inconvénients, on a déjà envisagé de prévoir des fers à souder électriques comportant un dispositif d'alimentation de fil de soudure qui est intégré au fer, ainsi qu'il est décrit dans les brevets FR-A-2 201 157 et DE-A-2 318 689. Si une telle disposition permet de résoudre les problèmes précités, il n'en reste pas moins que cette solution ne peut concerner que des fers à souder relativement sophistiqués et onéreux et qu'elle ne convient pas pour les fers à souder électriques courants du type crayon.

La présente invention vise essentiellement à remédier à ces inconvénients en procurant un dispositif de conception particulièrement simple et qui peut être aisément adapté aux fers à souder électriques du type crayon.

A cet effet, ce dispositif d'alimentation d'un fil de soudure pour un fer à souder électrique du type crayon comprenant un support formant crosse présentant, dans sa partie supérieure, un logement destiné à recevoir le fer à souder, des moyens de fixation du fer à souder dans ce logement de manière qu'il fasse corps avec la crosse et, dans le support en forme de crosse, des moyens d'avancement du fil de soudure et de guidage de ce fil en direction de la pointe chauffante du fer à souder, est caractérisé en ce que le logement pour le corps du fer à souder est constitué par une gorge à section droite en forme de V et les moyens de fixation du fer à souder dans le logement de la crosse sont constitués par un collier en matière plastique souple passant autour du corps cylindrique du fer à souder et accroché sur les deux faces de la crosse de manière à maintenir le corps cylindrique du fer à souder tangent aux deux faces du dièdre constituant la gorge.

Le dispositif d'alimentation suivant l'invention offre l'avantage qu'il peut être réalisé sous la forme d'un ensemble pouvant être associé à n'importe quel fer à souder du type crayon. Grâce à l'adjonction d'un tel dispositif d'alimentation à un fer à souder du type crayon, l'utilisateur n'utilise qu'une seule main pour tenir le "pistolet" que forment le fer à souder électrique et son support en forme de crosse contenant le dispositif d'alimentation du fil de soudure et il peut par conséquent utiliser son autre main pour tenir les pièces devant être soudées. Il en résulte à l'évidence une plus grande commodité d'utilisation du fer à souder.

On décrira ci-après, à titre d'exemple non limitatif, une forme d'exécution de la présente invention, en référence au dessin-annexé sur lequel:

la figure 1 est une vue en élévation d'un dispositif d'alimentation d'un fil de soudure assemblé avec un fer à souder électrique du type crayon.

La figure 2 est une vue en coupe verticale, à plus grande échelle, du support en forme de crosse du dispositif d'alimentation de fil de soudure.

La figure 3 est une vue en coupe verticale et transversale de la partie supérieure du support où est fixé le fer à souder électrique.

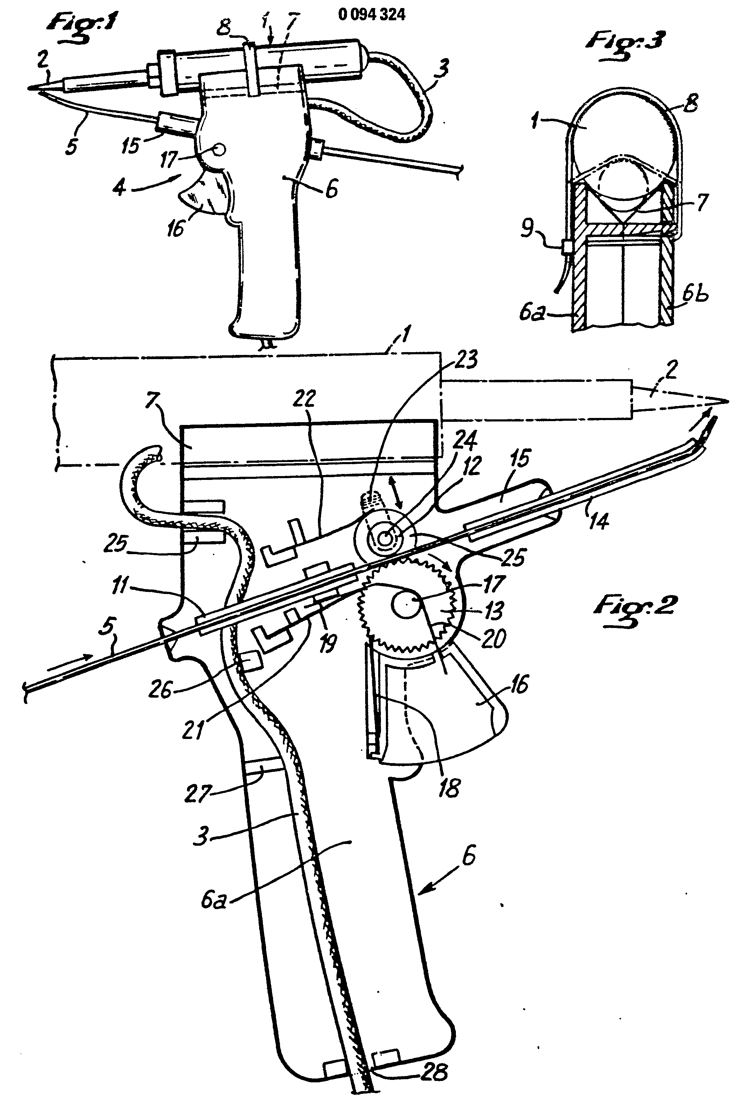

Sur la figure 1 est représenté un fer à souder électrique 1 du type crayon qui comporte, de la manière habituelle, une pointe chauffante 2 et qui est relié à une sourse de courant électrique par un cordon conducteur 3. Ce fer à souder électrique 1 du type crayon est représenté sur la figure 1 assemblé avec un dispositif désigné dans son ensemble par 4 et qui est prévu pour l'alimentation automatique en fil de soudure 5. Le dispositif d'alimentation 4 comprend un support 6 pour le fer à souder 1, ce support constituant une crosse ergonomique. Cette crosse 6 est avantageusement constituée de deux coquilles 6a, 6b réalisées en matière plastique moulée et assemblées l'une contre l'autre, par simple encliquetage, en définissant un volume interne dans lequel est logé le mécanisme commandant l'avancement du fil de soudure 5. Ces deux coquilles peuvent être ouvertes sans avoir à faire appel à un outil quelconque, du fait de leur liaison par simple encliquetage. Par ailleurs toutes les pièces du mécanisme sont montées à demeure sur une coquille et elles sont fixées par l'autre coquille lorsque celle-ci est appliquée sur la première. A sa partie supérieure, la crosse 6 présente un logement 7 pour le corps du fer à souder 1. Ce logement 7 est avantageusement constitué par une gorge à section droite en forme de V, autrement dit en forme de dièdre ouvert vers le haut dont les deux faces latérales sont prévues respectivement sur les deux coquilles 6a et 6b. Le corps cylindrique du fer à souder 1 est maintenu tangent aux deux faces du dièdre constituant la gorge 7, par tous moyens appropriés par exemple par un collier 8 en matière plastique souple dont une extrémité est fixée l'une des coquilles 6b, qui passe autour du corps cylindrique du fer à souder 1, et dont l'autre partie extrême est accrochée à l'autre coquille 6a, par exemple en passant dans une oreille 9 venant de moulage sur la face externe de cette coquille. Ce mode de fixation permet d'immobiliser des fers à souder dont les corps cylindriques ont des diamètes différents: on voit en effet sur la figure 3 comment un fer souder 1 de grand diamètre, représenté en trait plein, est immobilisé dans la gorge 7 et comment un fer à souder de petit diamètre, représenté en trait mixte, est également immobilisé dans cette gorge, au moyen du même collier souple 8.

Dans le volume interne de la crosse 6 sont logés les divers éléments constitutifs du mécanisme commandant l'avancement et le guidage du fil de soudure 5. Ce fil de soudure traverse de part en part, d'arrière en avant, la crosse 6 en étant incliné par rapport à l'axe du fer à souder 1 et en étant dirigé vers la pointe chauffante 2. De l'arrière vers l'avant le fil de soudure 5 passe successivement à travers un premier tube de guidage 11, puis entre un galet presseur 12 situé au-dessus du fil 5 et une roue d'entraînement dentée 13 située sous le fil, puis à travers un second tube de guidage 14 situé dans l'axe du premier tube 11 et qui est engagé dans un bossage 15 de la crosse dirigé vers la pointe chauffante 2. Le second tube de guidage 14 peut être légèrement incurvé à son extrémité, comme il est représenté sur la figure 2, pour diriger la partie extrême du fil de soudure 5 vers l'extrémité de la pointe chauffante 2.

L'avancement du fil de soudure 5 en direction de l'extrémité de la pointe chauffante 2 est commandé par une gâchette 16 qui est montée à pivotement sur un pivot transversal 17 autour duquel tourne également la roue dentée 13. La gâchette 16 porte un ressort plat 18 qui est sensiblement tangent à la roue dentée d'entraînement 13 et dont l'extrémité libre est en contact avec les dents de la roue 13. La gâchette 16 est rappelée par un ressort 20 qui peut être par exemple enroulé de le pivot 17, dont une branche prend appui sur une butée fixe 19 prévue dans la coquille 6a et dont l'autre branche agit sur la gâchette 16. 6b. Un autre ressort plat anti-retour 21 est fixé, à l'une de ses extrémités, dans la coquille 6a de la crosse 6 et son extrémité libre est en contact avec les dents de la roue 13.

Pour faire avancer le fil de soudure 5, l'opérateur appuie sur la gâchette 16, ce qui a pour effet de la faire tourner dans le sens des aiguilles d'une montre sur la figure 2. La gâchette 16 entraîne dans son mouvement la roue dentée 13, du fait que le ressort plat 18 est en prise avec les dents de cette roue et provoque la rotation de celle-ci. Par ailleurs, le galet presseur supérieur 12 est appliqué sur le fil 5, sous l'action d'un ressort plat 22, si bien que le fil 5 est pressé entre ce galet supérieur 12 et la roue d'entraînement inférieure 13. La rotation de la roue 13 entraîne donc une translation axiale du fil 5. L'amplitude de cette translation dépend de la course de pivotement de la gâchette 16.

Lorsque l'utilisateur relâche la gâchette 16, celle-ci revient en position de repos sous l'action de son ressort de rappel 20, le ressort plat d'entraînement 18 glissant alors sur les dents sans entraîner la roue 13. Cette roue est maintenue à l'encontre de tout mouvement en sens inverse, c'est-à-dire dans le sens inverse des aiguilles d'une montre, par le ressort plat anti-retour 21.

Le dispositif d'alimentation 4 comprend également un bouton 23 permettant de débrayer le galet presseur 12. Ce galet presseur est porté par un axe 24 qui traverse également deux rondelles plates 25 disposées de part et d'autre du galet presseur central en contact avec le fil 5. Chacune de ces rondelles 25 est soumise à l'action d'un ressort plat 22 qui applique sous pression le galet presseur central 12 sur le fil 5. Le bouton de débrayage 23 qui est situé à l'extérieur de la crosse 6 est mobile entre deux positions, à savoir une position embrayée dans laquelle le galet presseur 12, libéré, est appliqué sous pression sur le fil de soudure 5 et une position débrayée dans laquelle ce galet est écarté du fil, ce qui permet de déplacer celui-ci librement pour le mettre en place ou l'ajuster.

Le cordon conducteur 3 du fer à souder 1 est avantageusement emprisonné entre les deux coquilles 6a, 6b constituant la crosse 6. Ce cordon conducteur 3 pénètre ainsi dans la crosse 6 à travers un orifice d'entrée 25 prévu dans la face verticale postérieure et supérieure de la crosse 6 et délimité par des bossages venant de moulage, il est maintenu en place, à l'intérieur de la crosse 6, par d'autres bossages 26, 27 venant de moulage, et il sort de cette crosse, sur sa face inférieure, à travers un orifice 28.

On voit, d'après la description qui précède, que l'ensemble du fer à souder électrique 1 et du dispositif d'alimentation 4 constitue un pistolet à souder d'un emploi très commode d'une seule main.

Dans la forme d'exécution particulière qui a été décrite ci-dessus, le fil de soudure 5 est représenté comme étant introduit dans la crosse 6 à l'arrière de celle-ci et sortant à l'avant. Suivant une variante de réalisation, on pourrait très bien concevoir de loger, à l'intérieur même de la crosse 6, une réserve de fil enroulé en bobine laquelle se déroule progressivement au fur et à mesure de l'utilisation. Il suffit pour cela de prévoir, à l'intérieur de la crosse 6, des moyens pour recevoir cette bobine de fil et assurer le guidage du fil déroulé.

De même, le mécanisme d'avancement du fil de soudure 5 peut être réalisé différemment, par tout moyen mécanique permettant de faire avancer pas à pas le fil 5. On peut également prévoir éventuellement une alimentation électrique, à l'aide d'un moteur électrique incorporé dans la crosse 6 et dont l'alimentation est alors commandée par un interrupteur à bouton-poussoir.

**Revendications**

1.- Dispositif d'alimentation d'un fil de soudure pour un fer à souder électrique du type crayon, comprenant un support formant crosse (6) présentant, dans sa partie supérieure, un logement (7) destiné à recevoir le fer à souder (1), des moyens (8) de fixation du fer à souder dans ce logement (7) de manière qu'il fasse corps avec la crosse (6) et, dans le support en forme de crosse, des moyens d'avancement du fil de soudure (5) et de guidage de ce fil en direction de la pointe chauffante (2) du fer à souder caractérisé en ce que le logement (7) pour le corps du fer à souder (1) est constitué par une gorge à section droite en forme de V et les moyens (8) de fixation du fer à souder dans le logement (7) de la crosse sont constitués par un collier (8) en matière plastique souple passant autour du corps cylindrique du fer à souder (1) et accroché sur les deux faces de la crosse de manière à maintenir le corps cylindrique du fer à souder (1) tangent aux deux faces du dièdre constituant la gorge (7).

2.- Dispositif suivant la revendication 1, caractérisé en ce que la crosse (6) est constituée de deux coquilles (6a), (6b) réalisées en matière plastique moulée et assemblées l'une contre l'autre, par simple encliquetage, en définissant un volume interne dans lequel est logé le mécanisme commandant l'avancement du fil de soudure (5), les deux faces latérales de la gorge à section droite en forme de V constituant le logement (7) pour le fer étant prévues respectivement sur les deux coquilles (6a), (6b), le collier de fixation (8) étant fixé, à l'une de les extrémités, à l'une des coquilles (6b) et étant accroché, à son autre extrémité, à l'autre coquille (6a).

3.- Dispositif suivant l'une quelconque des revendications précédentes, caractérisé en ce que le fil de soudure (5) traverse de part en part, d'arrière en avant, la crosse (6), en étant incliné par rapport à l'axe du fer souder (1) et en étant incliné vers la pointe chauffante (2), ce fil de soudure (5) passant successivement à travers un premier tube de guidage (11), puis entre un galet presseur supérieur (12) et une roue d'entraînement dentée inférieure (13), puis à travers un second tube de guidage (14) situé dans l'axe du premier tube (11), la roue d'entraînement dentée inférieure (13) étant montée à rotation autour d'un pivot (17) et étant entraînée en rotation, dans un seul sens, par une gâchette (16) rappelée par un ressort (20).

4.- Dispositif suivant la revendication 3, caractérisé en ce que la gâchette (16) porte un ressort plat (18) qui est sensiblement tangent à la roue dentée (13) et dont l'extrémité libre est en contact avec les dents de la roue (13), de manière à entraîner cette roue en rotation lorsque l'on appuie sur la gâchette (16), et un autre ressort plat anti-retour (21) est en contact, par son extrémité libre, avec les dents de la roue (13) pour empêcher toute rotation de cette roue en sens inverse.

5.- Dispositif suivant l'une quelconque des revendications 3 et 4, caractérisé en ce que le galet presseur (12) est appuyé sur le fil par au moins un ressort (22) et l'axe (24) de ce galet presseur est commandé par un bouton de débrayage (23) permettant d'écarter le galet presseur (12) du fil (5).

6.- Dispositif suivant l'une quelconque des revendications précédentes, caractérisé en ce que le cordon conducteur (3) du fer à souder (1) passe à travers la crosse (6) en pénétrant à travers un orifice d'entrée (25) prévu dans la face verticale postérieure et supérieure de la crosse (6), il est maintenu en place, à l'intérieur de la crosse (6) par des bossages (26), (27), et il sort de cette crosse, sur sa face inférieure, à travers un orifice (28).

## Patentansprüche

1. Lötdrahtzuführapparat für einen elektrischen Bleistiftlötkolben mit einem als Griffstück (6) ausgebildeten Träger, der in seinem oberen Abschnitt eine Aufnahme (7) für den Lötkolben (1), Mittel (8) zur Befestigung des Lötkolbens in der Aufnahme, derart, daß er fest mit dem Griffstück (6) verbunden ist, und im die Form eines Griffstücks aufweisenden Träger Vorschubmittel für den Lötdraht (5) und zur Führung dieses Lötdrahts in Richtung auf die Lötspitze (2) des Lötkolbens aufweist, dadurch gekennzeichnet, daß die Aufnahme (7) für den Lötkolben (1) aus einer Rinne mit V-förmigem Querschnitt gebildet ist und daß die Befestigungsmittel (8) für den Lötkolben in der Aufnahme (7) durch ein Band (8) aus schmiegsamem Kunststoff gebildet werden, das um den zylindrischen Körper des Lötkolbens (1) verläuft und an den beiden Seitenflächen des Griffstücks derart verankert ist, daß es den zylindrischen Körper des Lötkolbens (1) die beiden Flanken des die Rinne (7) bildenden Flächenwinkels tangierend festhält.

2. Apparat nach Anspruch 1, dadurch gekennzeichnet, daß das Griffstück (6) aus zwei Schalen (6a), (6b) gebildet ist, die als Kunststofformstücke ausgebildet sind und durch einfaches Verrasten miteinander verbunden sind und dabei einen Innenraum bilden, in welchem der Steuermechanismus für den Vorschub des Lötdrahts (5) untergebracht ist, wobei die beiden Seitenflanken der Rinne mit V-förmigem Querschnitt, welche die Aufnahme (7) für den Lötkolben bildet, jeweils an einer der beiden Schalen (6a), (6b) vorgesehen sind und daß das Befestigungsband (8) mit seinem einen Ende an einer der Schalen (6b) befestigt und mit dem anderen Ende an der anderen Schale (6a) verankert ist.

3. Apparat nach einem der vorhergehenden Ansprüche, dadurch gekennzeichnet, daß der Lötdraht (5) Stück für Stück von hinten nach vorn das Griffstück (6) durchquert und in Bezug auf die Achse des Lötkolbens (1) und gegen die Lötspitze (2) schräg gerichtet ist, wobei der Lötdraht (5) nacheinander ein erstes Führungsrohr (11), darauf zwischen einem oberen Andrückrad (12) und einem unteren, gezahnten Vorschubrad (13), sodann durch ein zweites, in der Achsrichtung des ersten Führungsrohrs (11) angeordnetes Führungsrohr (14) hindurchgeführt ist, wobei das untere, gezahnte Vorschubrad (13) um einen Zapfen (17) drehbar gelagert ist und in einer Drehrichtung durch einen von einer Rückstellfeder (20) beaufschlagten Drücker (16) drehbar ist.

4. Apparat nach Anspruch 3, dadurch gekennzeichnet, daß der Drücker (16) eine Blattfeder (18) trägt, die im wesentlichen tangential zum gezahnten Vorschubrad (13) verläuft und deren freies Ende mit den Zähnen des Rades (13) in Berührung steht, derart, daß dieses Rad in Drehung versetzt wird, wenn man einen Druck auf den Drücker (16) ausübt, wobei eine andere, als Rücklaufsperre dienende Blattfeder (21) mit ihrem freien Ende mit den Zähnen des Rads (13) in Eingriff steht, um jede Drehung dieses Rades in Gegenrichtung zu verhindern.

5. Apparat nach einem der Ansprüche 3 oder 4, dadurch gekennzeichnet, daß das Andrückrad (12) durch wenigstens eine Feder (22) gegen den Draht gedrückt wird und die Achse (24) dieses Andrückrads durch einen Ausrückknopf (23) steuerbar ist, der es gestattet, das Andrückrad (12) vom Draht (5) abzuheben.

6. Apparat nach einem der vorhergehenden Ansprüche, dadurch gekennzeichnet, daß die Anschlußleitung (3) des Lötkolbens (1) das Griffstück (6) durchquert und dabei durch eine Einführöffnung (25) an der vertikalen und oberen Rückseite des Griffstücks geführt ist und im Inneren des Griffstücks (6) durch Vorsprünge (26, 27) in ihrer Position gehalten wird, und daß sie dieses Griffstück an seiner Unterseite durch eine Öffnung (28) verläßt.

**Claims**

1.- A device for supplying a filler wire for an electric soldering iron of the pen type comprising a support forming a butt (6) presenting, in its upper part, a housing (7) adapted to receive the soldering iron (1), means (8) for fixing the soldering iron (1) in this housing so that it forms a body with the butt (6) and, in the butt-shaped support, means for advancing the filler wire (5) and for guiding this wire in the direction of the heating tip (2) of the soldering iron, wherein the housing (7) for the soldering iron (1) is constituted by a groove of V-section and the means (8) for fixing the soldering iron in the housing (7) of the but are constituted by a clamp (8) of supple plastics material passing around the cylindrical body of the soldering body (1) and fastened on the two faces of the butt so as to maintain the cylindrical body of the soldering iron (1) tangential to the two faces of the dihedron constituting the groove.

2.- A device according to claim 1, wherein the butt (6) is constituted bp two shells (6a),(6b) made of moulded plastics material and assembled against each other by simple clipping, defining an internal volume in which is housed the mechanism controlling the advance of the filler wire (5), the two lateral face of the V-sectioned groove which constitutes the housing (7) for the iron being provided respectively on the two shells (6a), (6b), the fixing clamp (8) being fixed, at one of its ends, on one of the shells (6b) and being fastened, at its other end, to the other shell (6a).

3.- A device according to any of the preceding claims, wherein the filler wire (5) passes through the butt (6) in forward direction, being inclined with respect to the axis of the soldering iron (1) and inclined towards the heating tip (2), this filler wire (5) passing successively through a first guide tube (11), then between an upper presser roller (12) and a lower toothed drive wheel (13), then through a second guide tube (14) lying in the axis of the first tube (11), the lower toothed drive wheel (13) being mounted to rotate about a pivot pin (17) and being driven in rotation, in one direction only, by a trigger (16) returned by a spring (20).

4.- A device according to claim 3, wherein the trigger (16) bears a flat spring (18) which is substantially tangential to the toothed wheel (13) and of which the free end is in contact with the teeth of the wheel (13), so as to drive this wheel in rotation when the trigger (16) is pulled, and another flat anti-return spring (21) is in contact, by its free end, with the teeth of the wheel (13) to prevent any rotation of this wheel in reverse direction.

5.- A device according to any of claims 3 and 4 wherein the presser roller (12) abuts on the wire by at least one spring (22) and the spindle (24) of this presser roller is controlled by a disconnecting knob (23) which enables the presser roller (12) to move away from the wire (5).

6.- A device according to any of the preceding claim, wherein the conductive lead (3) of the soldering iron (1) passes through the butt (6), penetrating therein through an inlet orifice (25) provided in the upper rear vertical face of the butt (6), it is maintained in position inside the butt (6) by bosses (26), (27) and it emerges from this butt through an orifice (28) on its lower face.

**Fig:1**

0 094 324

**Fig:3**

**Fig:2**